# EUROPEAN PATENT APPLICATION

(11) **EP 4 617 881 A1**
(43) Date of publication of application: **17.09.2025**
(21) Application number: 25161874.0
(22) Date of filing: 05.03.2025
(51) Int. Cl.: G06F 11/34, G06F 11/32

(54) **INFORMATION PROCESSING APPARATUS, VISUALIZATION METHOD, AND VISUALIZATION PROGRAM**

(30) Priority: 12.03.2024 JP 2024038235
(71) Applicant: Yokogawa Electric Corporation, Tokyo 180-8750 (JP)
(72) Inventor: MAKIZAKI, Koji, Musashino-shi, Tokyo, 180-8750, (JP)
(74) Representative: Winter, Brandl - Partnerschaft mbB

(57) **Abstract**

An information processing apparatus includes an extraction unit that extracts an actual measurement value of a resource used by a function included in a system from a log file acquired from the system a calculation unit that calculates a score of the function on a basis of the actual measurement value of the resource used by the function and an upper limit value of the resource available by the function and a score display unit that generates and displays information visualizing the score of the function.

## Description

### FIELD

The present invention relates to an information processing apparatus, a visualization method, and a visualization program.

### BACKGROUND

The health and reserve capacity of a system need to be understood to investigate the cause of a trouble that arises and to confirm the scalability and availability of the system. For example, since the load and state of the system change depending on settings of various devices related to the system and the operation status of the system, a user visually checks log data obtained from the system and determines whether the system is excellent or poor.
Patent Literature 1: JP 2020-064674 A
Patent Literature 2: JP 2002-32274 A

However, as a system scale increases, the log data becomes enormous, and it is not realistic for the user to visually confirm the log data.

Therefore, it is required to visualize the health and reserve capacity of the system.

In one aspect, an object is to provide an information processing apparatus, a visualization method, and a visualization program capable of visualizing the health and reserve capacity of a system.

### SUMMARY

According to an aspect of an embodiment, an information processing apparatus includes an extraction unit that extracts an actual measurement value of a resource used by a function included in a system from a log file acquired from the system a calculation unit that calculates a score of the function on a basis of the actual measurement value of the resource used by the function and an upper limit value of the resource available by the function and a score display unit that generates and displays information visualizing the score of the function.

According to an aspect of an embodiment, a visualization method that causes a computer to execute a process includes extracting an actual measurement value of a resource used by a function included in a system from a log file acquired from the system calculating a score of the function on a basis of the actual measurement value of the resource and an upper limit value of the resource available by the function and generating and displaying information visualizing the score of the function.

According to an aspect of an embodiment, a visualization method that carried out by a computer includes extracting an actual measurement value of a resource used by a function included in a system from a log file acquired from the system calculating a score of the function on a basis of the actual measurement value of the resource and an upper limit value of the resource available by the function and generating and displaying information visualizing the score of the function.

According to an embodiment, it is possible to visualize the health and the reserve capacity of the system.

### BRIEF DESCRIPTION OF THE DRAWINGS

FIG. 1 is a diagram illustrating a configuration example of a system according to a first embodiment;
FIG. 2 is a functional block diagram illustrating a configuration of an information processing apparatus according to the first embodiment;
FIG. 3 is a diagram illustrating an example of a data structure of a function-specific specification table;
FIG. 4 is a diagram illustrating an example of a data structure of a function-specific actual measurement resource table;
FIG. 5 is a diagram illustrating an example of a data structure of a score table;
FIG. 6 is a diagram illustrating an example of graph information;
FIG. 7 is a flowchart illustrating a flow of processing of the information processing apparatus according to the first embodiment; and
FIG. 8 is a diagram for describing a hardware configuration example.

### DETAILED DESCRIPTION OF THE PREFERRED EMBODIMENTS

Hereinafter, an embodiment of an information processing apparatus, a visualization method, and a visualization program disclosed in the present application will be described in detail with reference to the drawings. Note that the present invention is not limited by the embodiment. In addition, the same elements are denoted by the same reference numerals, redundant description is appropriately omitted, and each embodiment can be appropriately combined within a range without inconsistency.

### First embodiment

### Configuration of system 1

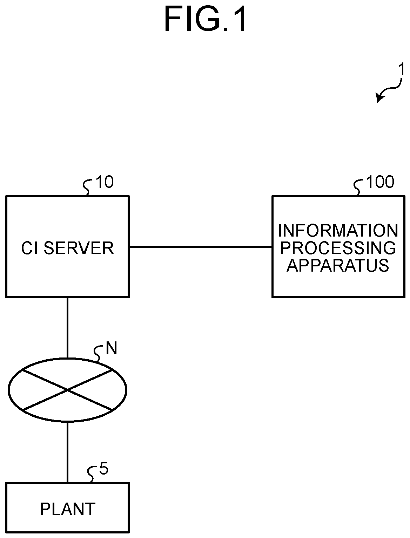

A configuration example of a system according to the present embodiment will be described. FIG. 1 is a diagram illustrating a configuration example of the system according to the present embodiment. As illustrated in FIG. 1, the system 1 includes a plant 5, a collaborative information (CI) server 10, and an information processing apparatus 100. The plant 5 and the CI server 10 are connected to each other via a network N or the like.

Note that a network N can adopt various communication networks such as a dedicated line, the Internet, and a long term evolution (LTE) network.

The plant 5 is an example of various plants using oil, petrochemical, chemical, gas, and the like, and includes a factory or the like having various facilities for obtaining products. For example, the plant 5 is constructed by using a distributed control system (DCS) (not illustrated) or the like, and operation control of equipment, a field device, sensors, and the like is executed.

The CI server 10 is an example of an information processing apparatus that is connected to various devices and systems in the plant 5 and integrally manages them.

The CI server 10 has a log collection function, and repeatedly executes a process of transmitting, to the information processing apparatus 100, a log file collected at a constant cycle by a log collection function.

The information processing apparatus 100 is an apparatus that visualizes the health and reserve capacity of the entire system 1 on the basis of the log file acquired from the CI server 10.

### Functional configuration of information processing apparatus 100

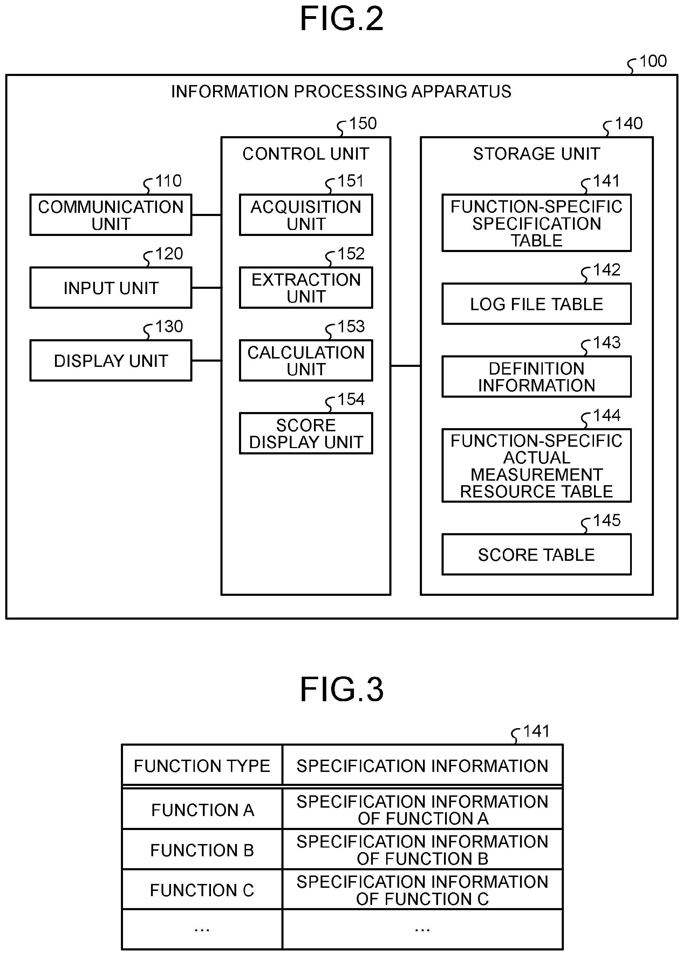

A configuration example of the information processing apparatus 100 illustrated in FIG. 1 will be described. FIG. 2 is a functional block diagram illustrating a configuration of the information processing apparatus according to the present embodiment. As illustrated in FIG. 2, the information processing apparatus 100 includes a communication unit 110, an input unit 120, a display unit 130, a storage unit 140, and a control unit 150.

The communication unit 110 executes data communication with the CI server 10. For example, a log file is transmitted from the CI server 10 at a constant cycle.

The input unit 120 inputs various types of information to the control unit 150 of the information processing apparatus 100. The input unit 120 is a keyboard, a mouse, a touch panel, or the like. A user may operate the input unit 120 to input a function-specific specification table 141, definition information 143, and the like.

The display unit 130 displays information output from the control unit 150 of the information processing apparatus 100. For example, the display unit 130 displays graph information of scores to be described later.

The storage unit 140 stores the function-specific specification table 141, a log file table 142, the definition information 143, a function-specific actual measurement resource table 144, and a score table 145. The storage unit 140 is realized by a memory, a hard disk, or the like.

The function-specific specification table 141 is a table that holds specification information for each function. FIG. 3 is a diagram illustrating an example of a data structure of the function-specific specification table. As illustrated in FIG. 3, the function-specific specification table 141 associates a function type with the specification information.

The function type indicates a type of a function. In FIG. 3, a function A, a function B, and a function C are illustrated for convenience. Note that examples of the functions include an Open Platform Communications Unified Architecture (OPC UA) function and an alarm transmission/reception function.

The specification information indicates an upper limit resource used by the corresponding function. For example, the resource includes a Windows system resource and a CI server system resource. The Windows system resource includes a CPU, a memory, a disk access, communication, and the like. The CI server system resource includes a CPU kernel, a CPU user, message transmission/reception, message failed, the number of queues, and the like.

The log file table 142 stores a plurality of log files transmitted from the CI server 10 at a constant cycle. In the following description, the plurality of log files are collectively referred to simply as a log file. In the log file, an actual measurement value of the resource in a certain period is recorded. In addition, the log file also records information regarding the occurrence of an event (including an error or the like).

The definition information 143 is information defining which log file stored in the log file table 142 to be used to extract information and how to extract the information in order to obtain information of a corresponding resource or information regarding the occurrence of an event. The definition information 143 includes a regular expression of a resource for extracting the resource, a regular expression of an event for extracting the event, and the like.

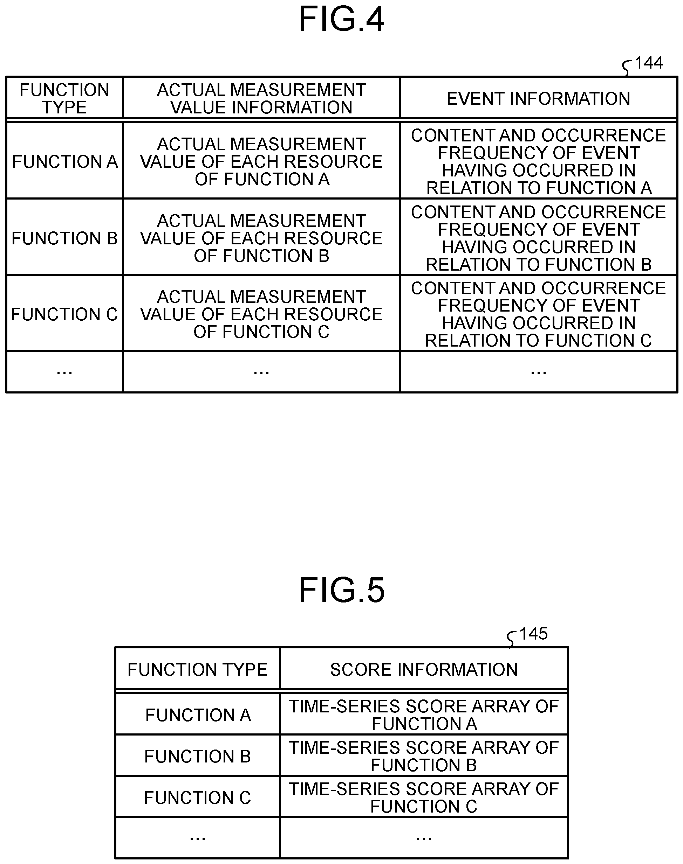

The function-specific actual measurement resource table 144 stores an actual measurement value of a resource for each function extracted from a log file and information regarding an event that has occurred in relation to the function. FIG. 4 is a diagram illustrating an example of a data structure of a function-specific actual measurement resource table. As illustrated in FIG. 4, in the function-specific actual measurement resource table 144, a function type, actual measurement value information, and event information are associated with each other. The function type indicates a type of a function. In FIG. 4, the function A, the function B, and the function C are illustrated for convenience. The actual measurement value information is information regarding the actual measurement value of each resource used by the corresponding function. The event information is information regarding the content and occurrence frequency (event occurrence frequency) of an event having occurred in relation to the function. Note that although a case is described here in which the actual measurement value information and the event information are stored separately, the event information may be included in part of the actual measurement value information.

The score table 145 stores score information for each function. For example, the score is information obtained by quantifying the reserve capacity of the system, and the larger the score, the more the reserve capacity. FIG. 5 is a diagram illustrating an example of a data structure of the score table. As illustrated in FIG. 5, in the score table 145, the function type and the score information are associated with each other. The function type indicates a type of a function. In FIG. 5, the function A, the function B, and the function C are illustrated for convenience. The score information is information indicating a time-series score array of the corresponding function. A specific description regarding the score will be described later.

The description proceeds to the control unit 150 in FIG. 2. The control unit 150 is a processing unit that controls the entire information processing apparatus 100, and is realized by, for example, a processor. The control unit 150 includes an acquisition unit 151, an extraction unit 152, a calculation unit 153, and a score display unit 154.

The acquisition unit 151 acquires a log file from the CI server 10 via the communication unit 110. The acquisition unit 151 stores the acquired log file in the log file table 142. The acquisition unit 151 repeatedly executes the above processing every time the log file is acquired.

The extraction unit 152 extracts actual measurement value information and event information of each function from the log file stored in the log file table 142 on the basis of the definition information 143 at a constant cycle. For example, the extraction unit 152 compares the regular expression of a certain resource set in the definition information 143 with the log file, and extracts the actual measurement value of each function from the log file. The extraction unit 152 compares the regular expression of a certain event set in the definition information 143 with the log file, and extracts the content and the occurrence frequency of the event related to each function from the log file.

The extraction unit 152 stores the actual measurement value information and the event information of each function extracted at a constant cycle in the function-specific actual measurement resource table 144. For example, the extraction unit 152 updates previous actual measurement value information and event information with latest actual measurement value information and event information. Note that the extraction unit 152 may accumulate the actual measurement value information and event information at each constant cycle in the function-specific actual measurement resource table 144.

The calculation unit 153 calculates the score of each function at a constant cycle on the basis of the function-specific specification table 141 and the function-specific actual measurement resource table 144. In the following description, an example of processing in which the calculation unit 153 calculates the score of the function A at a certain timing T₁ will be described.

The calculation unit 153 acquires the specification information of the function A from the function-specific specification table 141. As described above, the upper limit resource (the upper limit of each resource) used by the function is set in the specification information. The calculation unit 153 acquires the actual measurement value information and event information of the function A at the timing T₁ from the function-specific actual measurement resource table 144.

Here, for convenience of description, the resources used by the function A will be described as a CPU and a memory. The calculation unit 153 calculates a score related to the CPU, on the basis of a difference between an upper limit (for example, a CPU usage rate is 50%) of the CPU used by the function A and an actual measurement value (for example, an actual CPU usage rate is 5%) of the CPU by the function A. Such a score increases as the difference increases, and decreases as the difference decreases. The score corresponding to the difference is predefined.

The calculation unit 153 calculates a score related to the memory, on the basis of a difference between an upper limit (for example, a memory usage is 50%) of the memory used by the function A and an actual measurement value (for example, an actual memory usage is 10%) of the memory by the function A. Such a score increases as the difference increases, and decreases as the difference decreases.

Furthermore, the calculation unit 153 determines whether or not the event information of the function A satisfies the following condition.

Condition: The event information of the function A includes predetermined event contents, and an occurrence frequency of the predetermined event content is equal to or more than a threshold.

In a case where the above condition is not satisfied, the calculation unit 153 calculates, as the score of the function A, an average value of the score related to the CPU and the score related to the memory.

On the other hand, in a case where the above condition is satisfied, the calculation unit 153 calculates, as the score of the function A, a value obtained by subtracting a predetermined value from the average value of the score related to the CPU and the score related to the memory.

The calculation unit 153 performs the above processing to calculate the score of the function A at the timing T₁. For subsequent timing T₂ and subsequent timings, the calculation unit 153 calculates the score of the function A at timing T₂ and subsequent timings by executing the above processing. Accordingly, the score information (time-series score array) of the function A is generated.

The calculation unit 153 generates the score information of the function B and the score information of the function C by executing processing similar to that of the function A also for the function B and the function C.

The calculation unit 153 registers the score information of each function in the score table 145.

The score display unit 154 generates graph information of the score of each function on the basis of the score information of each function stored in the score table 145, and causes the display unit 130 to display the graph information.

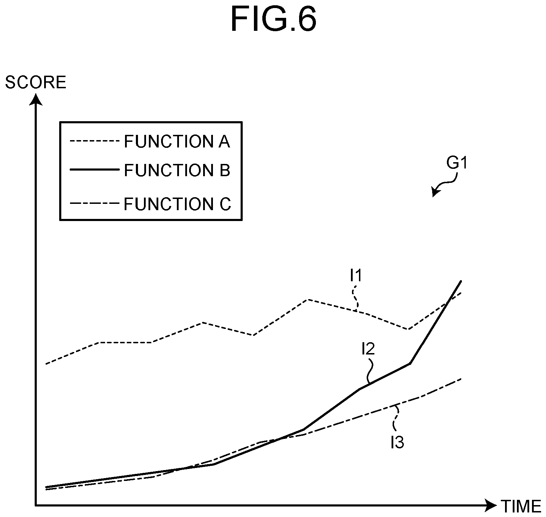

FIG. 6 is a diagram illustrating an example of the graph information. As illustrated in FIG. 6, a horizontal axis of graph information G1 is an axis corresponding to time, and a vertical axis is an axis corresponding to a score. For example, a line 11 indicates a relationship between the time and the score for the function A. A line l2 indicates a relationship between the time and the score for the function B. A line l3 indicates a relationship between the time and the score regarding the function C.

Incidentally, although the extraction unit 152, the calculation unit 153, and the score display unit 154 have been described to execute the above processing at a constant cycle, the above processing may be executed at various cycles. For example, the extraction unit 152, the calculation unit 153, and the score display unit 154 may execute the above processing in a first cycle (short cycle), a second cycle (intermediate cycle), or a third cycle (long cycle). However, a relationship between the lengths of the cycles is set as first cycle < second cycle < third cycle.

For example, for each first cycle, the extraction unit 152 extracts the actual measurement value information and event information of each function, the calculation unit 153 generates the score information of each function, and the score display unit 154 generates the score information.

For each second cycle, the extraction unit 152 extracts the actual measurement value information and event information of each function, the calculation unit 153 generates the score information of each function, and the score display unit 154 generates the score information.

For each third cycle, the extraction unit 152 extracts the actual measurement value information and event information of each function, the calculation unit 153 generates the score information of each function, and the score display unit 154 generates the score information.

Further, the score display unit 154 may cause the display unit 130 to display, in a comparable manner, the graph information generated in the first cycle, the graph information generated in the second cycle, and the graph information generated in the third cycle.

### Flow of processing

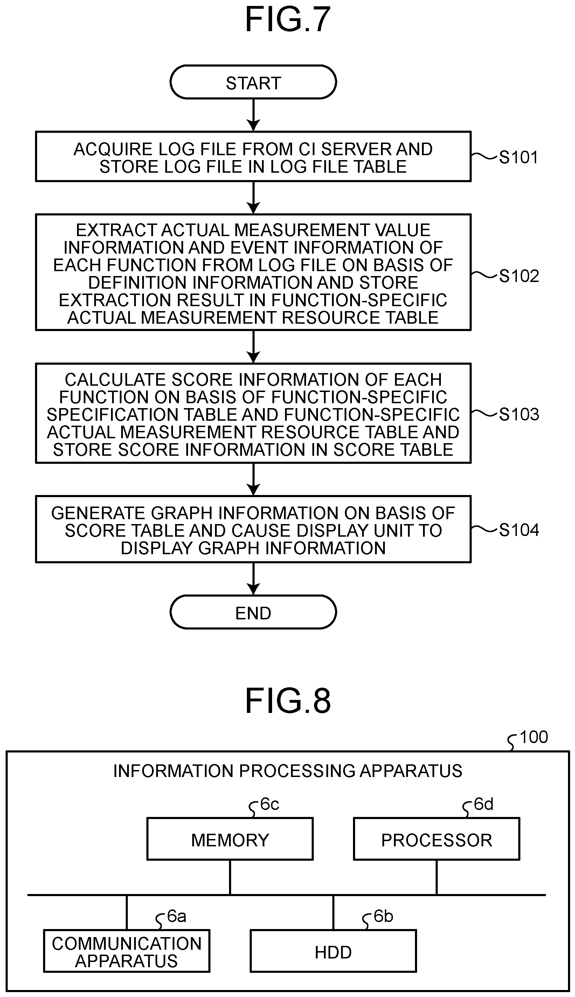

Next, an example of a flow of processing of the information processing apparatus 100 according to the present embodiment will be described. FIG. 7 is a flowchart illustrating a flow of processing of the information processing apparatus according to the present embodiment. As illustrated in FIG. 7, the acquisition unit 151 of the information processing apparatus 100 acquires a log file from the CI server 10 and stores the log file in the log file table 142 (step S101).

The extraction unit 152 of the information processing apparatus 100 extracts the actual measurement value information and event information of each function from the log file on the basis of the definition information 143 and stores an extraction result in the function-specific actual measurement resource table 144 (step S102).

The calculation unit 153 of the information processing apparatus 100 calculates the score information of each function on the basis of the function-specific specification table 141 and the function-specific actual measurement resource table 144, and stores the score information in the score table 145 (step S103).

The score display unit 154 of the information processing apparatus 100 generates graph information on the basis of the score table 145 and causes the display unit 130 to display the graph information (step S104).

### Effects

Next, effects of the information processing apparatus 100 according to the present embodiment will be described. The information processing apparatus 100 extracts the actual measurement value of the resource used by the function from the log file acquired from the system (CI server 10), calculates the score of the function on the basis of the actual measurement value of the resource used by the function and the upper limit value of the resource available by the function, and generates and displays information visualizing the score of the function. Accordingly, it is possible to visualize the health and reserve capacity of the system. In addition, by visualizing the health and the reserve capacity, it is also possible to efficiently investigate the cause of a trouble that arises and confirm the scalability and availability of the system.

The information processing apparatus 100 extracts the actual measurement value of the resource from the log file on the basis of the definition information defining the regular expression of the resource. In addition, the information processing apparatus 100 further extracts the content and the occurrence frequency of the event from the log file on the basis of the regular expression of the event of the definition information. Accordingly, the information used to calculate the score can be appropriately extracted from the log file.

The information processing apparatus 100 increases the score of the function as the difference between the actual measurement value of the resource used by the function and the upper limit value of the resource available by the function increases. Accordingly, the reserve capacity of the function can be appropriately quantified.

The information processing apparatus 100 repeatedly executes processing of calculating a score of a function at a constant cycle, and generates a time-series score for the function. Accordingly, it is possible to generate time-series score information of a function.

The information processing apparatus 100 generates a graph indicating a relationship between time and the score for the function. Accordingly, the health and reserve capacity of the system can be displayed by the graph.

### Hardware

Next, a hardware configuration example of the information processing apparatus 100 will be described. FIG. 8 is a diagram for describing a hardware configuration example. As illustrated in FIG. 8, the information processing apparatus 100 includes a communication apparatus 6a, a hard disk drive (HDD) 6b, a memory 6c, and a processor 6d. In addition, the units illustrated in FIG. 8 are connected to each other by a bus or the like.

The communication apparatus 6a communicates with the CI server 10 and the like. The HDD 6b stores a program and a DB for operating the functions illustrated in FIG. 2.

The processor 6d reads a program for executing processing similar to the processing units illustrated in FIG. 2 from the HDD 6b or the like and develops the program in the memory 6c, thereby operating a process for executing each function described with reference to FIG. 2 and the like. For example, this process executes a function similar to each processing unit included in the information processing apparatus 100. Specifically, the processor 6d executes a process of executing processing similar to that of the acquisition unit 151, the extraction unit 152, the calculation unit 153, the score display unit 154, or the like.

In this manner, the information processing apparatus 100 operates as an information processing apparatus that executes an information providing method by reading and executing the program. In addition, the information processing apparatus 100 can also implement functions similar to those of the above-described embodiment by reading the program from a recording medium by a medium reading device and executing the read program. Note that the program referred to in this other embodiment is not limited to being executed by the information processing apparatus 100. For example, the present invention can be similarly applied to a case where another computer or server executes the program or a case where these execute the program in cooperation.

This program can be distributed via a network such as the Internet. In addition, this program is recorded on a computer-readable recording medium such as a hard disk, a flexible disk (FD), a CD-ROM, a magneto-optical disk (MO), or a digital versatile disc (DVD), and can be executed by being read from the recording medium by a computer.

### Others

Some examples of combinations of the disclosed technical features are described below.
(1) An information processing apparatus comprising:
   an extraction unit that extracts an actual measurement value of a resource used by a function included in a system from a log file acquired from the system;
   a calculation unit that calculates a score of the function on a basis of the actual measurement value of the resource used by the function and an upper limit value of the resource available by the function; and
   a score display unit that generates and displays information visualizing the score of the function.
(2) The information processing apparatus according to (1), further comprising an acquisition unit that acquires a log file transmitted from the system at a constant cycle.
(3) The information processing apparatus according to (1) or (2), wherein the extraction unit extracts the actual measurement value of the resource from the log file on a basis of definition information defining a regular expression of the resource.
(4) The information processing apparatus according to (3), wherein the definition information further defines a regular expression of an event, and the extraction unit further extracts content and an occurrence frequency of the event from the log file on a basis of the regular expression of the event.
(5) The information processing apparatus according to (4), wherein the calculation unit calculates the score of the function by further using the content and the occurrence frequency of the event.
(6) The information processing apparatus according to any one of (1) to (5), wherein the calculation unit increases the score of the function as a difference between the actual measurement value of the resource used by the function and the upper limit value of the resource available by the function increases.
(7) The information processing apparatus according to any one of (1) to (6), wherein the calculation unit repeatedly executes processing of calculating the score of the function at a constant cycle, and generates a time-series score for the function.
(8) The information processing apparatus according to (7), wherein the score display unit (154) generates a graph indicating a relationship between time and the score for the function.
(9) A visualization method that causes a computer to execute a process comprising:
   extracting an actual measurement value of a resource used by a function included in a system from a log file acquired from the system;
   calculating a score of the function on a basis of the actual measurement value of the resource and an upper limit value of the resource available by the function; and
   generating and displaying information visualizing the score of the function.
(10) A visualization program that causes a computer to execute a process comprising:
   extracting an actual measurement value of a resource used by a function included in a system from a log file acquired from the system;
   calculating a score of the function on a basis of the actual measurement value of the resource and an upper limit value of the resource available by the function; and
   generating and displaying information visualizing the score of the function.

## Claims

1. An information processing apparatus comprising:
an extraction unit (152) that extracts an actual measurement value of a resource used by a function included in a system from a log file acquired from the system;
a calculation unit (153) that calculates a score of the function on a basis of the actual measurement value of the resource used by the function and an upper limit value of the resource available by the function; and
a score display unit (154) that generates and displays information visualizing the score of the function.

2. The information processing apparatus according to claim 1, further comprising an acquisition unit (151) that acquires a log file transmitted from the system at a constant cycle.

3. The information processing apparatus according to claim 1 or 2, wherein the extraction unit (152) extracts the actual measurement value of the resource from the log file on a basis of definition information defining a regular expression of the resource.

4. The information processing apparatus according to claim 3, wherein the definition information further defines a regular expression of an event, and the extraction unit (152) further extracts content and an occurrence frequency of the event from the log file on a basis of the regular expression of the event.

5. The information processing apparatus according to claim 4, wherein the calculation unit (153) calculates the score of the function by further using the content and the occurrence frequency of the event.

6. The information processing apparatus according to any one of claim 1 to 5, wherein the calculation unit (153) increases the score of the function as a difference between the actual measurement value of the resource used by the function and the upper limit value of the resource available by the function increases.

7. The information processing apparatus according to any one of claim 1 to 6, wherein the calculation unit (153) repeatedly executes processing of calculating the score of the function at a constant cycle, and generates a time-series score for the function.

8. The information processing apparatus according to claim 7, wherein the score display unit (154) generates a graph indicating a relationship between time and the score for the function.

9. A visualization method that carried out by a computer, comprising:
extracting an actual measurement value of a resource used by a function included in a system from a log file acquired from the system;
calculating a score of the function on a basis of the actual measurement value of the resource and an upper limit value of the resource available by the function; and
generating and displaying information visualizing the score of the function.

10. A visualization program that causes a computer to execute a process comprising:
extracting an actual measurement value of a resource used by a function included in a system from a log file acquired from the system;
calculating a score of the function on a basis of the actual measurement value of the resource and an upper limit value of the resource available by the function; and
generating and displaying information visualizing the score of the function.
